# EUROPEAN PATENT APPLICATION

(11) **EP 3 318 662 A1**
(43) Date of publication of application: **09.05.2018**
(21) Application number: 17200215.6
(22) Date of filing: 06.11.2017
(51) Int. Cl.: C25D 11/24, C23F 13/00, C23C 22/10, C23C 22/17, C23C 22/40, C23C 22/42

(54) **COMPOSITION AND METHOD FOR SEALING OF ANODIZED ALUMINUM COATINGS**

(30) Priority: 04.11.2016 US 201615344351
(71) Applicant: Hamilton Sundstrand Corporation, Windsor Locks, CT 06096-1010 (US)
(72) Inventor: DING, Zhongfen, South Windsor, CT Connecticut 06074 (US); ZHANG, Weilong, Glastonbury, CT Connecticut 06033 (US); SMITH, Blair A., South Windsor, CT Connecticut 06074 (US); JAWOROWSKI, Mark R., Glastonbury, CT Connecticut 06033 (US); ZAFIRIS, Georgios S., Glastonbury, CT Connecticut 06033 (US)
(74) Representative: Towler, Philip Dean

(57) **Abstract**

A method includes providing a workpiece with at least one surface having an anodized aluminum coating and a trivalent chromium sealant. The at least one surface of the workpiece is submerged in a post-treatment sealant composition for 0.5 to 20 minutes. The sealant composition comprises a corrosion inhibitor, an organic complexing agent, an oxidant and water.

## Description

### BACKGROUND

The disclosed subject matter relates generally to anodized aluminum coatings, and more specifically to sealing and protecting anodized aluminum coatings.

Anodized aluminum coatings, used in a number of industries and applications, have a very thin barrier layer under a more porous main coating structure. To improve corrosion resistance of the coating and substrate, anodized aluminum coatings are often sealed. Conventionally, hexavalent chromium (Hex-Cr) compounds have been used to seal anodized aluminum coatings and improve corrosion resistance. However, Hex-Cr sealants are toxic and carcinogenic and thus are being phased out in favor of more environmentally- and health-friendly compounds.

One common substitute for Hex-Cr includes variants on trivalent chrome (TCP) sealing. Effective sealing, particularly for TCP sealants requires deep sealant penetration and homogeneous distribution within the anodized coating. A panel with a commercially available trivalent sealing technology can provide reasonable sealing which often can pass the 336 hr neutral salt fog chamber (ASTM B117) test requirement. However, the process still needs to be controlled very strictly according to published procedures to provide suitable opportunity for sealing and yet, the results are often mixed. Among other factors, shortening the processing time reduces penetration and effectiveness for each conventional TCP sealing technology.

### SUMMARY

A sealant composition comprises, or consists essentially of, a corrosion inhibitor, an organic complexing agent, an oxidant, and water.

A sealant composition comprises, or consists essentially of, a corrosion inhibitor, an organic complexing agent, an oxidant, and a surfactant.

A method includes providing a workpiece with at least one surface having an anodized aluminum coating and a trivalent chromium sealant. The at least one surface of the workpiece is submerged in a post-treatment sealant solution for 0.5 to 20 minutes. The sealant composition is a sealant composition of the invention.

### BRIEF DESCRIPTION OF THE DRAWINGS

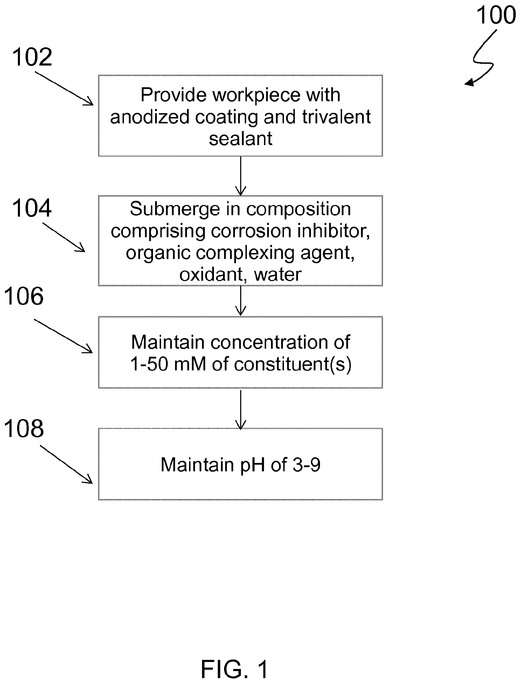

FIG. 1 is a flow chart of an example two-step sealing process.

### DETAILED DESCRIPTION

Currently there are a number of commercially available TCP sealing technologies. Examples include CHEMEON TCP-HF™, CHEMEON TCP-NP™, SurTec 650V™, Luster-On Aluminescent™, and Socomore SOCOSURF™ TCS+PACS. While these and other TCP sealants improve properties of an anodized aluminum coating, beyond the relatively thin barrier layer of the anodized coating, the application process for existing TCP sealants must be strictly adhered to. While properly applied TCP sealants can satisfy certain tests, the margin for error is small, and waste and cost are increased due to the need for scrapping or reprocessing of insufficiently sealed anodized coatings.

Sealing effects of a TCP composition can be improved using a second step, which includes application of a secondary sealant composition according to method 100 in FIG. 1. The process begins with providing a workpiece having at least one surface with an anodized aluminum coating (performed by such methods as chromic acid, boric sulfuric acid, thin film sulfuric acid, sulfuric acid, and/or tartaric sulfuric acid anodizing). The provided workpiece also includes a trivalent chrome sealant applied to the anodized surface(s). The trivalent chrome sealant is the first step of a two-step sealing process disclosed herein, and can be applied at the same facility as the second (post-treatment) sealant composition step. Alternatively, the workpiece can be provided with the TCP sealant already applied, ready for the second (post-treatment) sealant composition step according to method 100.

After providing the workpiece(s) with a TCP-sealed anodized coating (step 102), surface(s) of the workpiece having such a coating are submerged, according to step 104, into an aqueous composition of the invention, e.g. one which consists essentially of one or more corrosion inhibitors, an organic complexing agent, an oxidant, and water. Certain embodiments of the composition, however, can also include one or more surfactants to promote wetting, or promote solution stability with certain combinations of corrosion inhibitor(s), organic complexing agent(s), and oxidant(s). Certain areas of the substrate or anodized aluminum coating can also have high surface energy, and a surfactant would facilitate deposition of the composition during the subsequent steps.

Other nonessential components which may be present in solution include a buffer to control or maintain pH, as well as alkaline earth cations such as Mg²⁺, Ca²⁺, and Sr2⁺ which precipitate free fluoride. Impurities that can reduce corrosion inhibition, and should be minimized where possible, include chlorides, sulfates, iron, copper, and other cations that are more noble than the aluminum substrate. Halogen anion concentration in the composition is to be minimized to the extent possible, generally preferred to be maintained below a total anion concentration of 0.1 millimolar (mM).

Most broadly, the corrosion inhibitors are at least partially soluble in water, and can be selected from a group consisting of: a molybdate compound, a silicate compound, a vanadate compound, a rare earth salt, a phosphate or orthophosphate compound, a phosphate or orthophosphate silicate compound, a phosphate or orthophosphate silicate hydrate compound, a phosphate or orthophosphate silicate hydrate compound that includes at least one of zinc, calcium, strontium, and aluminum cations, and combinations thereof. The oxidant can be selected generally from a group consisting of: a permanganate, a peroxide, a persulfate, a percarbonate, a perborate, and combinations thereof.

In addition to the corrosion inhibitors and oxidants above, the organic complexing agent can be selected from a group consisting of: a poly-amine compound, a polyol compound, a poly-thiol compound, and combinations thereof. In certain embodiments, the organic complexing agent can be selected from a group consisting of: a phytate, an ethylenediaminetetraacetic acid (EDTA), a thiourea, a benzotriazole, a nitrilotriacetic acid, a citric acid, a polycarboxylic acid, and combinations thereof.

Overall, a concentration of each of the components in the aqueous solution is initially provided to be in a range of 1-50 millimolar (mM). This concentration range of one or more of the components can be maintained throughout the sealing process (step 106), and a solution pH can be maintained between 3 and 9 (step 108). In certain embodiments, the concentration of one or more of the components can be maintained in a range of 1-10 mM and/or the solution pH can be maintained between 4 and 6. The concentrations and/or pH range of the solution can be maintained in part or entirely through use of a buffer.

Thus, for an otherwise conventional TCP sealed anodized Al alloy part, the post treatment (i.e., second step of two-step sealing process) involves dipping the sealed surface(s) for 30 seconds to 20 minutes in an anodic corrosion inhibitor solution such as is described herein, while maintaining a process temperature in a range of 20° C to 80° C. In certain embodiments, the process temperature range is 20° C to 50°C. Contact time may be varied to control the extent of sealing; short contact times can provide moderate sealing for superior adhesion of subsequently applied organic coatings while longer contact times provide more complete sealing for the protection of components that will not be subsequently coated. Process temperature is dependent on the sealing solution selected and the degree of sealing desired. Typically, greater temperature permits faster sealing. The length of time at a given temperature determines the degree of sealing which is determined by specific application requirements.

The process can greatly improve corrosion protection properties over the conventional TCP sealant. Certain processes may utilize certain of the disclosed classes of corrosion inhibitors, but in the absence of other constituents do not achieve the same result. Further, such inhibitors are applied during the chromating step, resulting in a single step sealing process. For example, certain corrosion inhibitors, applied at the same time as a trivalent chromium composition (i.e., in a single step), result in conversion of a substantial portion of the trivalent chromium into hexavalent chrome (Hex-Cr). However the presence of Hex-Cr, even when formed indirectly by combination of TCP precursors with permanganate or certain other oxidants such as hydrogen peroxide in a single-step sealing process, nevertheless undermines the goal of eliminating hexavalent chrome from industrial processes due to its well-known toxicity and negative environmental effects.

In contrast, the synergy of the components in the disclosed post treatment composition is believed to build, in combination with the TCP previously applied to the anodized surface(s), a better physical barrier to isolate the base / substrate metal from the environment. This is in addition to the corrosion inhibitive reaction on any defects in the anodized aluminum and TCP layers. The oxidant in the disclosed post treatment composition appears to enhance corrosion resistance by activating both cathodic and anodic corrosion inhibitive behavior of the other components in the disclosed post treatment composition, as well as around the anodized aluminum coating barrier layer.

### Discussion of Possible Embodiments

A sealant composition assembly according to an exemplary embodiment of this disclosure comprises, or consists essentially of, a corrosion inhibitor, an organic complexing agent, an oxidant, and water. Optionally a surfactant may also be present.

The assembly of the preceding paragraph can optionally include any one or more of the following features, configurations and/or additional components:
A further embodiment of the foregoing composition, wherein the corrosion inhibitor is selected from a group consisting of: a molybdate compound, a silicate compound, a vanadate compound, a rare earth salt, a phosphate or orthophosphate compound, a phosphate or orthophosphate silicate compound, a phosphate or orthophosphate silicate hydrate compound, a phosphate or orthophosphate silicate hydrate compound that includes at least one of zinc, calcium, strontium, and aluminum cations, and combinations thereof.

A further embodiment of any of the foregoing compositions, wherein the organic complexing agent is selected from a group consisting of: a poly-amine compound, a polyol compound, a poly-thiol compound, and combinations thereof.

A further embodiment of any of the foregoing compositions, wherein the organic complexing agent is selected from a group consisting of: a phytate, an EDTA, a thiourea, a benzotriazole, a nitrilotriacetic acid, a citric acid, a polycarboxylic acid, and combinations thereof.

A further embodiment of any of the foregoing compositions, wherein the oxidant is selected from a group consisting of: a permanganate, a peroxide, a persulfate, a percarbonate, a perborate, and combinations thereof.

A further embodiment of any of the foregoing compositions, wherein the concentration of at least one of the components is in a range of 1-50 mM.

A further embodiment of any of the foregoing compositions, wherein the pH of the composition is between 3 and 9.

A further embodiment of any of the foregoing compositions, wherein the pH of the composition is between 4 and 6.

A method according to an exemplary embodiment of this disclosure, among other possible things, includes providing a workpiece with at least one surface having an anodized aluminum coating and a trivalent chromium sealant. The at least one surface of the workpiece is submerged in a post-treatment sealant composition for 0.5 to 20 minutes. The sealant composition comprises, or consists essentially of, a corrosion inhibitor, an organic complexing agent, an oxidant, and water.

The method of the preceding paragraph can optionally include any one or more of the following features, configurations and/or additional components:
A further embodiment of the foregoing method, wherein the corrosion inhibitor is selected from a group consisting of: a molybdate compound, a silicate compound, a vanadate compound, a rare earth salt, a phosphate or orthophosphate compound, a phosphate or orthophosphate silicate compound, a phosphate or orthophosphate silicate hydrate compound, a phosphate or orthophosphate silicate hydrate compound that includes at least one of zinc, calcium, strontium, and aluminum cations, and combinations thereof.

A further embodiment of any of the foregoing methods, wherein the organic complexing agent is selected from a group consisting of: a poly-amine compound, a polyol compound, a poly-thiol compound, and combinations thereof.

A further embodiment of any of the foregoing methods, wherein the organic complexing agent is selected from a group consisting of: a phytate, an EDTA, a thiourea, a benzotriazole, a nitrilotriacetic acid, a citric acid, a polycarboxylic acid, and combinations thereof.

A further embodiment of any of the foregoing methods, wherein the oxidant is selected from a group consisting of: a permanganate, a peroxide, a persulfate, a percarbonate, a perborate, and combinations thereof.

A further embodiment of any of the foregoing methods, further comprising: maintaining the concentration of one or more of the components in a range of 1 to 50 mM.

A further embodiment of any of the foregoing methods, further comprising: maintaining the pH of the composition in a range between 3 and 9.

A further embodiment of any of the foregoing methods, further comprising: maintaining a process temperature in a range of 20° C to 80° C.

A further embodiment of any of the foregoing methods, wherein the sealant composition further comprises a surfactant.

A sealant composition assembly according to an exemplary embodiment of this disclosure consists essentially of a corrosion inhibitor, an organic complexing agent, an oxidant, a surfactant, and water.

The assembly of the preceding paragraph can optionally include any one or more of the following features, configurations and/or additional components:
A further embodiment of the foregoing composition, wherein the corrosion inhibitor is selected from a group consisting of: a molybdate compound, a silicate compound, a vanadate compound, a rare earth salt, a phosphate or orthophosphate compound, a phosphate or orthophosphate silicate compound, a phosphate or orthophosphate silicate hydrate compound, a phosphate or orthophosphate silicate hydrate compound that includes at least one of zinc, calcium, strontium, and aluminum cations, and combinations thereof; the organic complexing agent is selected from a group consisting of: a poly-amine compound, a polyol compound, a poly-thiol compound, and combinations thereof; and the oxidant is selected from a group consisting of: a permanganate, a peroxide, a persulfate, a percarbonate, a perborate, and combinations thereof.

A further embodiment of any of the foregoing compositions, wherein a concentration of at least one of the corrosion inhibitor, the organic complexing agent, and the oxidant is in a range of 1 to 50 mM; and a solution pH is in a range between 3 and 9.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A sealant composition comprising:
a corrosion inhibitor;
an organic complexing agent;
an oxidant; and
water.

2. The sealant composition of claim 1 further comprising a surfactant.

3. A sealant composition as claimed in claim 1 consisting essentially of:
a corrosion inhibitor;
an organic complexing agent;
an oxidant; and
water.

4. A sealant composition as claimed in claim 1 consisting essentially of:
a corrosion inhibitor;
an organic complexing agent;
an oxidant;
a surfactant; and
water.

5. A sealant composition as claimed in any of claims 1 to 4, wherein the corrosion inhibitor is selected from a group consisting of: a molybdate compound, a silicate compound, a vanadate compound, a Rare earth salt, a phosphate or orthophosphate compound, a phosphate or orthophosphate silicate compound, a phosphate or orthophosphate silicate hydrate compound, a phosphate or orthophosphate silicate hydrate compound that includes at least one of zinc, calcium, strontium, and aluminum cations, and combinations thereof.

6. A sealant composition as claimed in any of claims 1-5, wherein the organic complexing agent is selected from a group consisting of: a poly-amine compound, a polyol compound, a poly-thiol compound, and combinations thereof.

7. A sealant composition as claimed in any of claims 1-6, wherein the organic complexing agent is selected from a group consisting of: a phytate, an EDTA, a thiourea, a benzotriazole, nitrilotriacetic acid, citric acid, a polycarboxylic acid, and combinations thereof.

8. A sealant composition as claimed in any of claims 1-7, wherein the oxidant is selected from a group consisting of: a permanganate, a peroxide, a persulfate, a percarbonate, a perborate, and combinations thereof.

9. A sealant composition as claimed in any of claims 1-8, wherein the concentration of at least one of the corrosion inhibitor, the organic complexing agent, and the oxidant is in a range of 1-50 mM.

10. A sealant composition as claimed in any of claims 1-9, wherein the pH of the composition is between 3 and 9.

11. A sealant composition as claimed in claim 10, wherein the pH of the composition is between 4 and 6.

12. A method comprising:
providing a workpiece with at least one surface having an anodized aluminum coating and a trivalent chromium sealant;
submerging the at least one surface of the workpiece in a post-treatment sealant composition for 0.5 to 20 minutes, wherein the sealant composition is as claimed in any preceding claim.

13. The method of claim 12, further comprising:
maintaining a process temperature in a range of 20° C to 80° C.
